# EUROPEAN PATENT SPECIFICATION

(11) **EP 1 286 342 B1**
(45) Date of publication and mention of the grant of the patent: **24.11.2004**
(21) Application number: 02255548.6
(22) Date of filing: 08.08.2002
(51) Int. Cl.: G11B 7/007, G11B 7/24, G11B 7/00, G11B 23/28, G11B 20/00

(54) **Optical disk and methods for recording and reproducing essential information of optical disc**
Optische Platte und Aufnahme-und-Wiedergabe-Verfahren wesentlicher Daten der optischen Platte
Disque optique et méthode d'enregistrement et de reproduction d'informations essentielles du disque optique

(30) Priority: 09.08.2001 KR 2001047957
(43) Date of publication of application: 26.02.2003
(73) Proprietor: SAMSUNG ELECTRONICS CO., LTD., Suwon-City, Kyungki-do (KR)
(72) Inventor: Lee, Kyung-geun, Bundgang-gu, Seongnam-si, Gyeonggi-do (KR); Park, In-Sik, Paldal-gu, Suwon-si, Gyeonggi-do (KR); Yoon, Du-seop, Gwonseon-gu, Suwon-si, Gyeonggi-do (KR)
(74) Representative: Chugg, David John

(56) References cited:
- EP-A- 0 971 345
- EP-A- 0 997 899
- EP-A- 1 152 402
- PATENT ABSTRACTS OF JAPAN vol. 2000, no. 22, 9 March 2001 (2001-03-09) -& JP 2001 148140 A (MITSUBISHI CHEMICALS CORP), 29 May 2001 (2001-05-29)

## Description

The present invention relates to an optical disc and methods for recording an essential information on and reproducing an essential information from an optical disc, and more particularly, to a recordable optical disc in which an essential information is recorded by phase change, and methods for recording an essential information in and reproducing an essential information from an optical disc.

Optical discs, a kind of recording media onto which information is recorded or from which information is reproduced by light radiation, are classified into a read only memory (ROM) type, a write once read many (R) type, a random access memory (RAM) type, a rewritable (RW) type, and the like according to the recording and reproducing methods. Optical discs are classified into a single-layer disc and a dual-layer disc according to the number of information recording layers.

Single-layer discs have only one information layer regardless of whether they are single-sided or double-sided, and reproduce information by reflecting an incident laser at a reflective layer formed on the information layer.

Dual-layer discs have two layers each including an information layer regardless of whether they are single-sided or double-sided: a first layer includes a semi-transparent layer, and a second layer includes a reflective layer. Information of the first layer is reproduced by light reflected from the semi-transparent layer, and information of the second layer is reproduced by light reflected from the reflective layer after having transmitted through the semi-transparent layer.

Optical discs are also classified into single-sided discs and double-sided discs according to the structure of the information layer on a substrate. Single-sided discs have an information layer on only one side of the substrate, whereas double-sided discs have information layers on both sides of the substrate. Accordingly, double-sided discs have the same recording capacity as two single-sided discs. The single- and double-sided discs are manufactured as a single-layer or dual-layer disc, as described above.

Also, optical discs are categorized into compact discs (CDs), digital versatile disc (DVDs), next-generation DVDs and the like according to the recording capacity: 650 MB for CDs, 4.7 GB for DVDs, and 4.7 GB or greater for next-generation DVDs.

The specifications of such optical discs differ from one another according to the recording capacity. CDs and DVDs have the same diameter of 120 mm but have different substrate thicknesses of 1.2 mm for CDs, 0.6 mm for DVDs, and about 0.1 mm for next-generation DVDs. A laser beam of 780nm and an objective lens having a numerical aperture (NA) of 0.4 are used for CDs, and a 650-nm laser beam and a 0.6-NA objective lens are used for DVDs. Next-generation DVDs are known to use a blue laser and a 0.85-NA objective lens.

The general physical structure of such an optical disc is divided, from the center of the disc, into a clamping area, a burst cutting area (BCA), a lead-in area, a data area, and a lead-out area.

The clamping area is an annular area located at the center of the disc to which a clamping force is applied with a clamping tool. The data area includes a user area, a spare area, and a guide area. User data are recorded in the data area. The lead-in area and the lead-out area are located inside and outside the data area composed of sectors, respectively.

An area where BCA codes are formed is specified as a BCA field or a BCA. BCA codes for recording essential information on optical discs, such as serial number, date of manufacture and the like, are recorded in an area not specified for user data recording and located inside the lead-in area. In general, the BCA is located between the clamping area and the lead-in area and extends about 1 mm in a radial direction. For the DVD-R/RW or CD-R/RW, a power calibration area (PCA) and a program memory area (PMA) are located between the BCA and the lead-in area. The BCA for the DVD-R/RW or CD-R/RW has a radial length of about 0.8 mm.

Most optical discs record BCA codes in their BCA in the form of a barcode mark by partially burning away their recording layer.

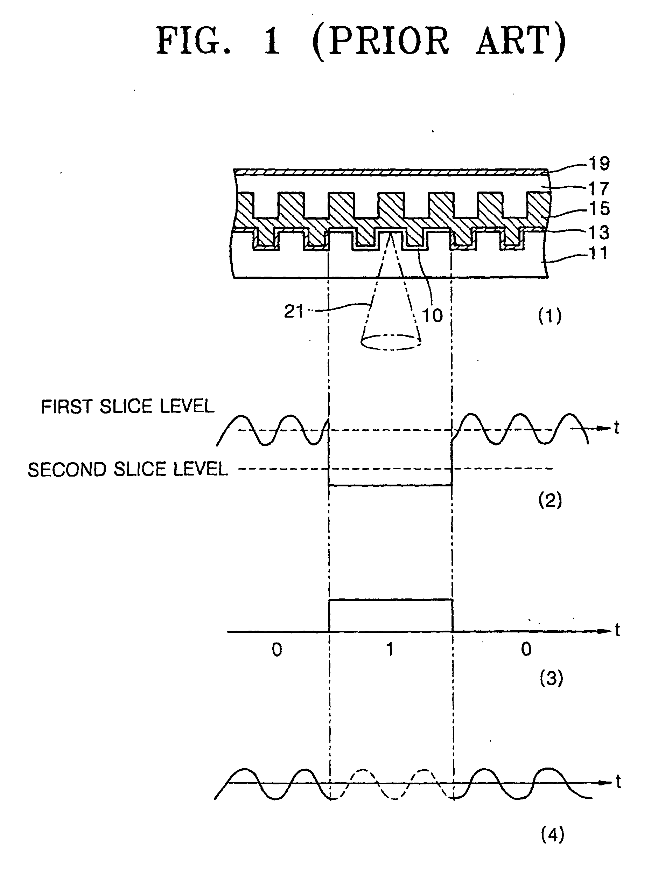

Figure 1 is a diagram illustrating methods for recording BCA codes in and reproducing BCA codes from a conventional single-layer optical disc disclosed in U.S. Patent No. 6,208,736. Referring to Figure 1, BCA codes are recorded in the conventional optical disc (1) in the form of a barcode mark by burning away a portion of a reflective layer 13 formed on a substrate 11 with a laser beam 21. In forming such a barcode mark, a pulsed laser such as yttrium-aluminium-garnet (YAG) laser is focused on the reflective layer 13 through a focusing lens (not shown) to burn away the reflective layer 13, thereby forming a non-reflective portion 10. In Figure 1, reference numeral 15 denotes an adhesive layer, reference numeral 17 denotes a protective layer, and reference numeral 19 denotes a print layer on which labels may be printed.

In Figure 1, a waveform (2) is detected from the conventional single-layer optical disc (1) including the non-reflective portion 10. Because the non-reflective portion 10 has zero reflectivity so that a waveform from the non-reflective portion 10 appears straight below a second slice level. The reflectivity of the periphery region of the non-reflective portion 10 is sinusoidal and has an average level equal to a first slice level.

In Figure 1, a waveform (3), which is obtained by slicing the waveform (2), represents a marking detection signal. A marking detection signal generally represents the location of address, the number of frame synchronous signals, the number of read clocks, etc. Here, the waveform (3) represents the physical location of a particular address. A waveform (4) represents read clocks obtained from the marking detection signal by synchronization.

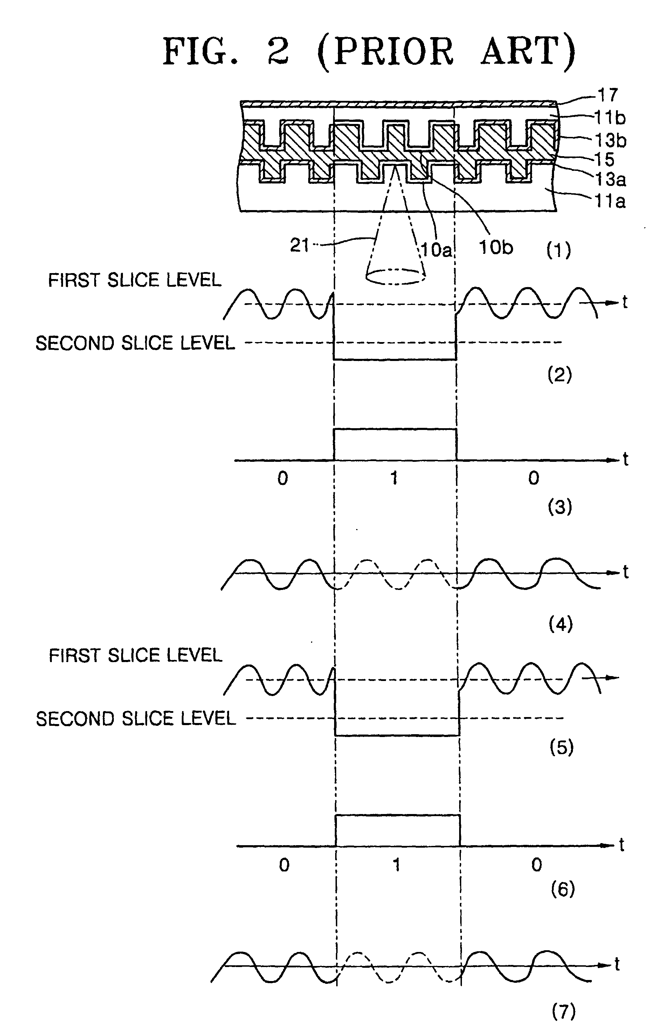

Figure 2 is a diagram illustrating methods for recording BCA codes in and reproducing BCA codes from a conventional dual-layer optical disc. Referring to Figure 2, in the conventional dual-layer optical disc (1), BCA codes are recorded in the form of a barcode mark by burning away portions of the reflective layers 13a and 13b, which are formed on the first and second substrates 11a and 11b, respectively, with a laser beam 21. As shown in Figure 2, BCA codes are recorded as a pattern of the non-reflective portion 10a or 10b and the remaining reflective portions. In Figure 2, reference numeral 15 denotes an adhesive layer, and reference numeral 17 denotes a protective layer.

In Figure 2, a waveform (2) is reproduced from a first layer, which includes the reflective layer 13a and the first substrate 11a, of the conventional dual-layer optical disc (1). A waveform (3), which is obtained by slicing the waveform (2), represents a marking detection signal. A waveform (4) represents read clocks obtained from the marking detection signal of the waveform (3) by synchronization.

In Figure 2, a waveform (5) is reproduced from a second layer, which includes the reflective layer 13b and the second substrate 11b, of the conventional dual-layer optical disc (1). A waveform (6) of a marking detection signal is obtained by slicing the waveform (5). A waveform (6) represents read clocks obtained from the marking detection signal of the waveform (5) by synchronization.

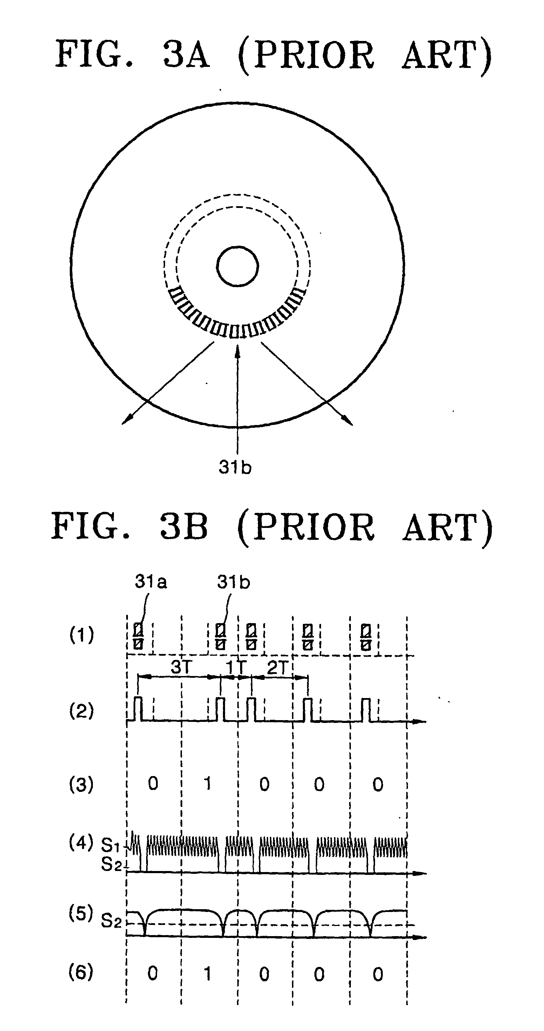

Figure 3A shows bar code marks formed in a circle in the BCA of a conventional optical disc. A signal used to record data "01000" of (3) in Figure 3B has a waveform (2) of Figure 3B. Bar code marks 31a and 31b, as shown in (1) of Figure 3B, are formed by the waveform (2). A signal reproduced from the bar code marks 31a and 31b has a waveform (4) of Figure 3B. When a low-frequency component is passed through a low-pass filter, a waveform (5) is obtained. By reproducing the waveform (5), data "01000" (6) of Figure 3B, which is identical to the record data (3), is obtained.

In the conventional optical discs, BCA codes are recorded as barcode marks by burning away a reflective layer of the disc with a high-intensity beam, such as YAG laser, to cause a physical deformation to the reflective layer. However, this recording method causes a problem when applied to thinner optical discs.

In particular, when BCA codes are recorded in a next-generation DVD that is as thin as 0.1 mm by the same method applied to the conventional optical disc, the protective layer is damaged by beam energy so that an intended pattern of barcode marks cannot be formed. For a dual-layer optical disc that includes a dielectric layer having a high thermal absorbance, the optical disc is damaged by easily absorbing the heat of a high-energy laser beam so that a desired pattern of marks cannot be formed.

In addition, BCA codes can be recorded in a recordable optical disc by using phase change. In this case, a separate BCA code recording process should follow an initialization process and thus needs an additional BCA code recording apparatus. The additional process for recording BCA codes increases processing time consumption.

EP-A-0,997,899 (Matsushita Electric Industrial Co Ltd) reflecting the preamble of the independent claims discloses an optical disc having a recording film deposited in an amorphous state and then irradiated to make the film crystallised or to have a high reflectivity as an initialisation step before the disc is delivered from the factory. This document forms the pre-characterising portion of the claims appended hereto.

With a view to solve or reduce the above-described problems, it is a first aim of embodiments of the present invention to provide a multi-layer optical disc in which essential information is recorded using existing optical pickup apparatus.

It is a second aim of embodiments of the present invention to provide a method for recording essential information within a short time using an existing optical pickup apparatus, without causing damage by laser beam energy.

It is a third aim of embodiments of the present invention to provide a method for reproducing essential information from an optical disc by using an existing optical pickup apparatus, which can be applied to reproduce essential information from any recording layer of a recordable dual-layer optical disc.

According to the present invention there is provided an apparatus and method as set forth in the appended claims. Preferred features of the invention will be apparent from the dependent claims, and the description which follows.

In a first aspect of the present invention there is provided an optical disc in which essential information such as a serial number or the like is recorded in a burst cutting area of the disc; characterised in that: the optical disc is a multi-layer optical disc having a plurality of recording layers; and the essential information is recorded in a burst cutting area in one of the plurality of recording layers as a pattern of crystalline and amorphous marks.

In a second aspect of the present invention there is provided a method for recording essential information such as a serial number or the like in a burst cutting area of an optical disc, characterised in that: the optical disc is a multi-layer optical disc having a plurality of recording layers; the essential information is recorded in a burst cutting area in one of the plurality of recording layers; and the method comprises: heating said one of the plurality of amorphous recording layer above a temperature of crystallization by radiating a beam according to a photoelectrically converted signal; and slowly cooling said heated recording layer to the temperature of crystallization or below to form a pattern of crystalline and amorphous marks.

In a third aspect of the present invention there is provided a method for reproducing essential information such as a serial number or the like from a burst cutting area of an optical disc, characterised in that: the optical disc is a multi-layer optical disc having a plurality of recording layers; the essential information is recorded in a burst cutting area in one of the plurality of recording layers; and the method comprises: radiating a beam onto a pattern of crystalline and amorphous marks of said one of the plurarity of recording layers in which the essential information of the optical disc is recorded; receiving the beam reflected from the pattern of crystalline and amorphous marks and photoelectrically converting the received beam to detect a signal; filtering the detected signal through a high-pass filter; and reproducing the essential information of the optical disc from the filtered signal.

It is preferable that the crystalline and amorphous marks are in the form of barcodes extending in a radial direction, forming a circle around the center of the optical disc. Preferably, the crystalline mark has a higher reflectivity than the amorphous mark. Preferably, the crystalline mark has a reflectivity no less than 20%.

In embodiments of the present invention, the pattern of crystalline and amorphous marks refers to an arrangement of crystalline and amorphous marks in an essential information area (EIA) of a recordable optical disc, which is achieved by forming a crystalline mark in a layer that is amorphous when deposited on the optical disc capable of recording data by phase change.

The optical disc capable of data recordal by phase change refers to an optical disc from which a signal can be detected from a variation in reflectivity between crystalline and amorphous phases of the optical recording medium.

When intended to record information in a data area of an optical disc, a high-power laser beam of a narrow pulse width is preferably radiated to heat the recording layer to a melting temperature to thereby make the recording layer amorphous. Next, the heated recording layer may be rapidly cooled to maintain the amorphous phase, thereby resulting in an amorphous information mark in the data area.

When intended to erase information from the data area of the optical disc, a low-power laser beam of a wide pulse width is preferably radiated to heat the recording layer to the temperature of crystallization, and then the recording layer is slowly cooled to form a regular crystalline lattice so that the information is erased from the data area.

According to embodiments of the present invention, the principle of recording information in and reproducing information from the data area of an optical disc, described above, is applied to record and erase the essential information of a recordable optical disc, but the record and erase phases in the EIA are opposite to those in the data area.

According to specific embodiments of the present invention, recording of essential information in an initialization of a recordable optical disc, in which information can be recorded by phase change, can be performed continuously using an existing optical pickup apparatus. Also, embodiments of the present invention use a laser diode commonly used in optical pickup apparatuses so that a problem of disc damage by high-intensity laser beam in a conventional BCA code recording method can be solved/reduced. In particular, for multi-layer optical discs, essential information may be reproduced as long as the layer including the essential information is irradiated by a laser, regardless of which layer includes the essential information.

The essential information of the optical disc according to the present invention may be recorded in any code including BCA code.

For a better understanding of the invention, and to show how embodiments of the same may be carried into effect, reference will now be made, by way of example, to the accompanying diagrammatic drawings in which:
Figure 1 is a diagram illustrating methods for recording BCA (burst cutting area) codes in and reproducing the BCA codes from a single-layer optical disc disclosed in U.S. Patent No. 6,208,736;
Figure 2 is a diagram illustrating methods for recording BCA codes in and reproducing the BCA codes from a dual-layer optical disc disclosed in U.S. Patent No. 6,208,736;
Figure 3A shows an optical disc disclosed in U.S. Patent No. 6,208,736 and including barcode marks are formed;
Figure 3B shows record and read signals for the bar code marks formed as BCA codes in the optical disc of U.S. Patent No. 6,208,736;
Figure 4 is a sectional view of an optical disc according to a preferred embodiment of the present invention;
Figure 5 is a flowchart illustrating a method for recording essential information in an optical disc according to a preferred embodiment of the present invention;
Figure 6 illustrates step-by-step a method for recording essential information in an optical disc according to a preferred embodiment of the present invention;
Figure 7A shows the power level of a laser beam applied to record essential information in the optical disc by the method according to embodiments of the present invention;
Figure 7B shows the temperature of a recording layer in recording essential information in the optical disc by the method according to embodiments of the present invention;
Figure 8 is a flowchart illustrating a method for reproducing essential information from an optical disc according to a preferred embodiment of the present invention;
Figure 9 is a sectional view of an optical disc according to another preferred embodiment of the present invention;
Figure 10 illustrates a read signal obtained by the essential information reproducing method according to embodiments of the present invention;
Figure 11 shows a multi-layer optical disc according to another embodiment of the present invention;
Figures 12A and 12B are plan and sectional views, respectively, of an optical disc according to another preferred embodiment of the present invention in which barcode type marks are formed;
Figure 12C shows a mark signal reproduced from the barcode type marks formed in the optical disc of Figures 12A and 12B;
Figure 13A shows an optical disc according to another preferred embodiment of the present invention with barcode type marks in a protective layer; and
Figure 13B and 13C shows mark signals read from the barcode type marks formed in the optical disc of Figure 13A.

Preferred embodiments of an optical disc and methods for recording essential information in and reproducing essential information from an optical disc by phase change will be described in greater detail with reference to the appended drawings.

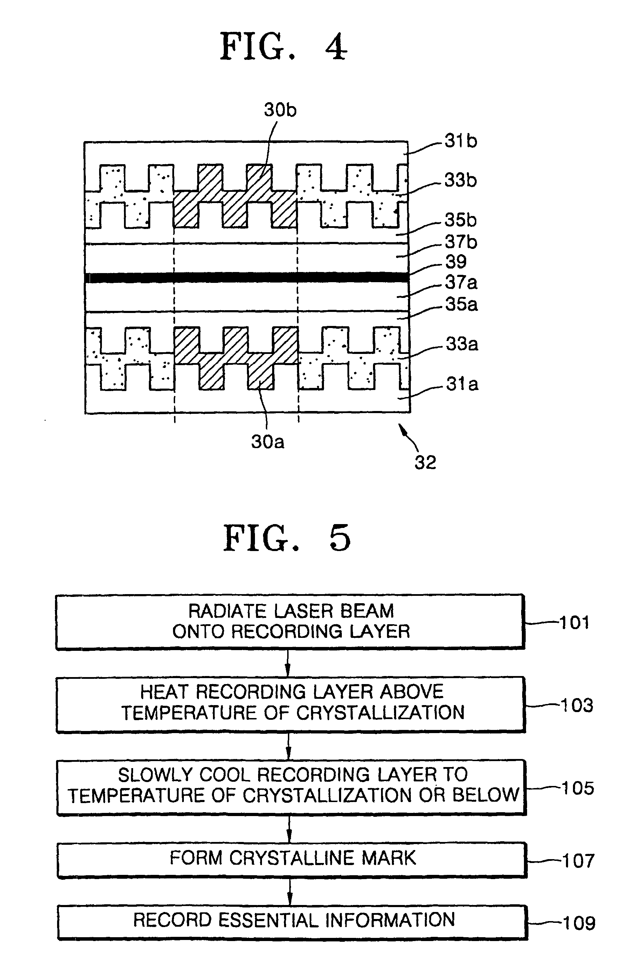

Figure 4 shows an optical disc according to a preferred embodiment of the present invention. In the optical disc shown in Figure 4, which is a recordable digital versatile disc (DVD-R), recording layers 33a and 33b are formed on first and second substrates 31a and 31b, respectively. A reflective layer 35a and a protective layer 37a are formed on the recording layer 33a, and a reflective layer 35b and a protective layer 37b are formed on the recording layer 33b. The first and second substrates 31a and 31b are bonded to each other in a symmetrical structure by an adhesive layer 39.

As shown in Figure 4, crystalline marks 30a and 30b are formed in the recording layers 33a and 33b, respectively. As described above, the present invention records essential information in and reproduces essential information from the optical disc based on the principle of phase change where a signal is detected by a refractivity variation between crystalline and amorphous marks. Therefore, optical discs according to the teachings of the present invention including essential information in the form of crystalline and amorphous marks are limited to optical discs capable of data recording by phase change. The present invention therefore cannot be applied to read-only discs, such as CDs or DVD-ROMs, which do not employ the phase change principle.

The crystalline and amorphous marks in the recording layers 33a and 33b are formed as a series of radial bars (barcode) that are formed in a circle around the center of the optical disc, between the clamping area and the power calibration area (PCA). For other optical discs, such crystalline and amorphous marks are formed between the clamping area and the lead-in area. For any recordable optical disc, regardless of whether it is a single-layer, multi-layer, single-sided, or double-sided optical disc, essential information of the optical disc is recorded as crystalline and amorphous marks by crystallizing a portion of an essential information area (EIA) in an amorphous recording layer after deposition of the amorphous recording layer.

The crystalline marks 30a and 30b have a higher reflectivity than the amorphous marks. The reflectivity of the crystalline marks 30a and 30b is not less than 20%. A binary alloy or ternary alloy including tellurium (Te) and selenium (Se), which are susceptible to be amorphous, has been used as a main material for currently available recordable optical discs that record data by phase change. In particular, a ternary alloy of Te, Ge, and antimony (Sb) exhibits a high absorbance in the wavelength region of a laser beam and a large difference in reflectivity between crystalline and amorphous phases.

An essential information recording method by phase change according to the present invention involves heating the recording layer of an optical disc to the temperature of crystallization by layer irradiation with proper timing in response to a photoelectrically converted essential information signal and slowly cooling the heated recording layer below the temperature of crystallization to form a crystalline mark, thereby resulting in a pattern of crystalline and amorphous marks.

Figure 5 is a flowchart illustrating a preferred embodiment of the essential information recording method by phase change according to the present invention. Referring to Figure 5, to record essential information of an optical disc, a laser beam is first radiated onto the EIA of the recording layer (Step 101). Next, the recording layer is heated above the temperature of crystallization (Step 103). The temperature of the heated recording layer is slowly cooled to the temperature of crystallization or below (Step 105) to form a crystalline mark in a predetermined region of the EIA (Step 107). Steps 101 through 107 are repeated to fully record the essential information of the optical disc (Step 109). The essential information is recorded as a pattern of crystalline and amorphous marks.

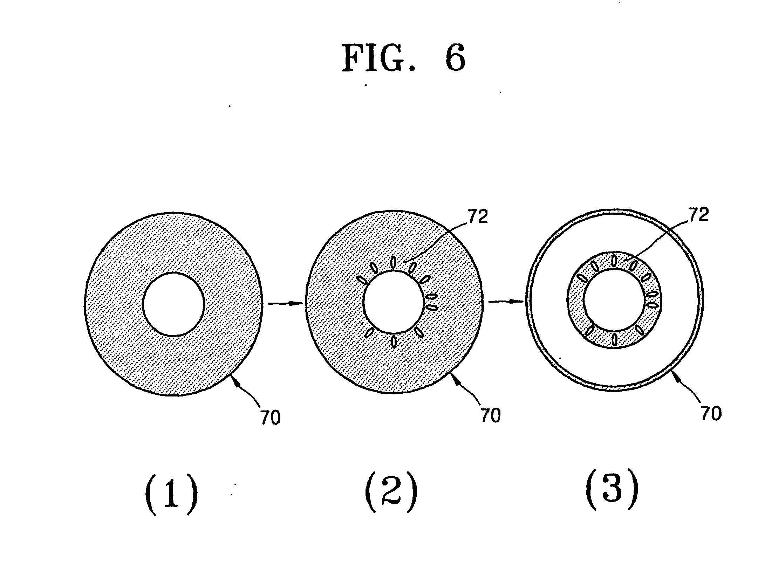

Figure 6 is an illustration of an essential information recording method according to a preferred embodiment of the present invention. After mastering an optical disc 70, a recording layer is first formed on the optical disc 70 so that the entire optical disc 70 is in an amorphous phase, as shown in (1) of Figure 6. The optical disc 70 shown in (1) of Figure 6 is not fully but partially amorphous as it includes a small number of fine crystals. Next, as shown in (2) of Figure 6, a laser beam is radiated onto an EIA 72 of the recording layer by an optical pickup apparatus (not shown) to initialize the optical disc 70.

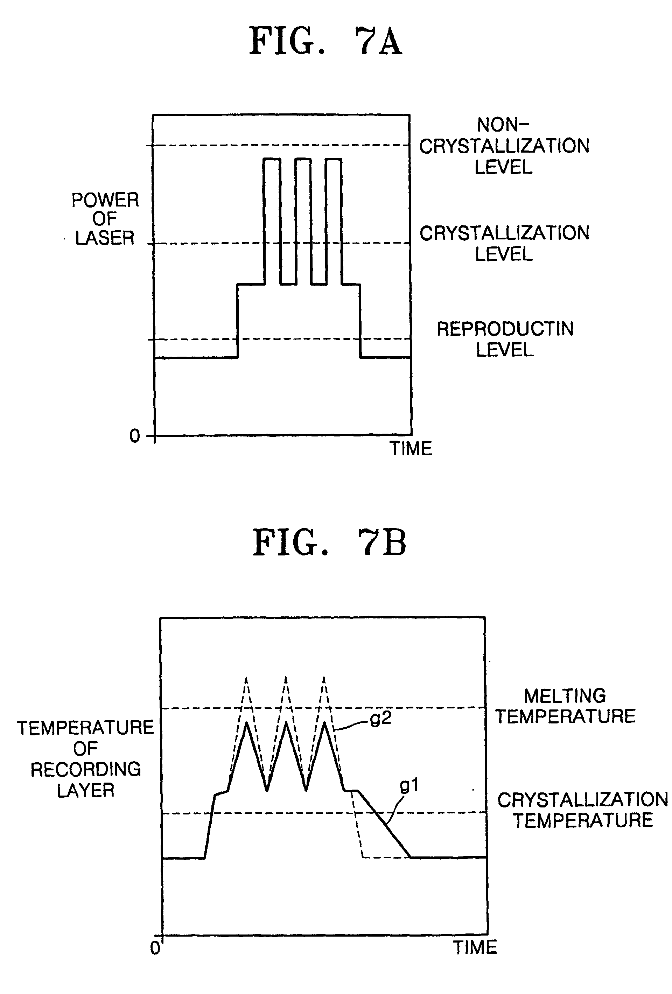

Next, the power of the laser beam is raised to a crystallization level, as shown in Figure 7A, until the recording layer irradiated with the laser beam reaches above the temperature of crystallization and below a melting temperature, as shown in Figure 7B.

Next, the temperature of the recording layer heated by the beam radiation is slowly lowered to the temperature of crystallization or below, as indicated by *g1* in Figure 7B. If the recording layer is heated above the melting temperature and is cooled rapidly, as indicated by *g2,* then the recording layer may change into an amorphous phase so that it cannot be identified from a data area where information is recorded.

As a result, a crystalline mark is formed in the area of the recording layer exposed to the laser beam so that the essential information is recorded as a pattern of crystalline and amorphous marks, as shown in (3) of Figure 6.

The phase change in the EIA 72 of the recording layer differs from that in the data area. The temperature of the data area is raised to the melting temperature, whereas the temperature of the EIA 72 is raised to the temperature of crystallization lower than the melting temperature in the embodiment of the essential information recording method according to the present invention.

In other words, information is recorded in the data area by rapidly cooling the temperature of the recording layer heated to the melting point to form completely amorphous marks. Also, neighbouring areas of the data area, in which information is not recorded, are slowly cooled after being heated to the melting point so that the neighbouring areas are crystallized. In contrast, the EIA 72 is irradiated by a laser beam and slowly cooled to record the essential information as a pattern of crystalline and amorphous marks. The amorphous parts of the pattern are the parts of the initial amorphous recording layer which were not irradiated and crystallized.

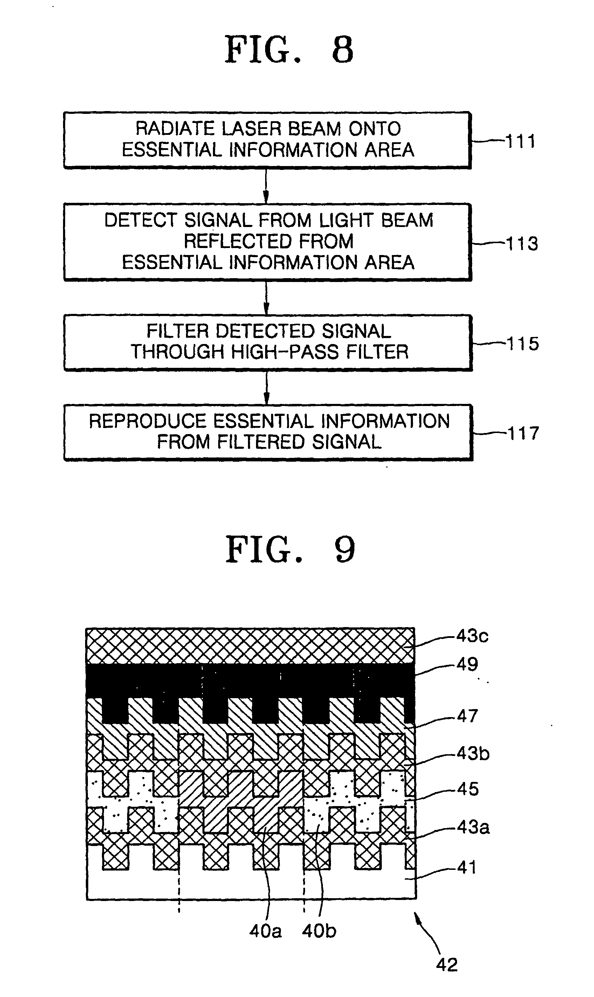

Figure 8 is a flowchart illustrating an essential information reproducing method according to a preferred embodiment of the present invention. The essential information reproducing method involves radiating a laser beam onto the EIA with a pattern of crystalline and amorphous marks (Step 111), detecting an electrical signal converted from a light beam reflected from the EIA and received by a photodetector (Step 113), filtering the detected signal through a high-pass filter (Step 115), and reproducing the essential information from the filtered signal (Step 117).

In a conventional optical disc, the reflectivity of a predetermined area of the recording layer, which has been physically removed to record a BCA (burst cutting area) code as a barcode type mark therein, is lower than that of the neighbouring areas. For this reason, a detection signal from the BCA is filtered through a low-pass filter to reproduce the detection signal. In contrast, for a recordable optical disc according to a preferred embodiment of the present invention in which essential information is recorded as a pattern of crystalline and amorphous marks, the reflectivity of the crystalline mark is greater than that of the amorphous mark so that a detection signal from the crystalline mark is filtered through a high-pass filter to reproduce the detection signal.

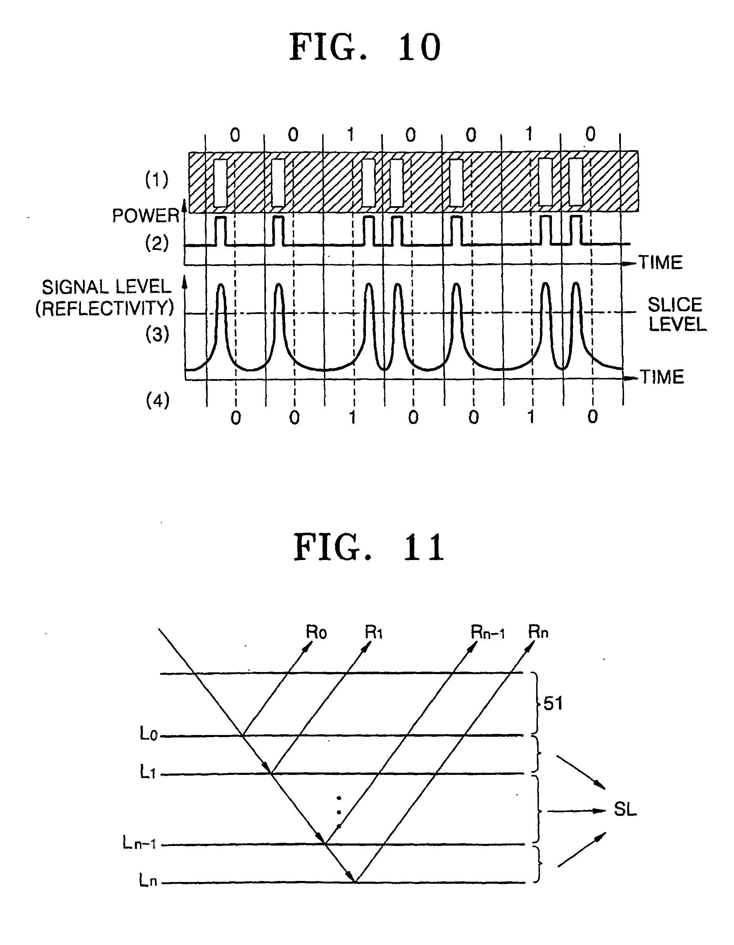

Figure 9 shows a DVD-RAM as an embodiment of the present invention where essential information is recorded. Referring to Figure 9, the DVD-RAM includes a protective layer 43a, a recording layer 45, a protective layer 43a, a reflective layer 47, an adhesive layer 49, and a protective layer 43c, which are sequentially formed on a substrate 41. As described above, a barcode type crystalline mark 40a is formed by radiating a laser beam onto the recording layer 45, which is amorphous when deposited, until the laser power reaches a crystallization level.

Because the reflectivity of the crystalline mark 40a is higher than that of an amorphous mark 40b, a reproduction signal from the crystalline mark 40a becomes logic high, and a reproduction signal from the amorphous mark 40b becomes logic low.

Figure 10 is a diagram illustrating an essential information reproducing method according to an embodiment of the present invention with the assumption that data "0010010" is recorded as the essential information.

As shown in (1) of Figure 10, a barcode type mark appearing in a leading half of each period corresponds to "0", and a barcode type mark appearing in the following half of each period corresponds to "1". The laser power level applied to record the barcode type marks is shown in (2) of Figure 10. In (3) of Figure 10, a signal synchronized by high-pass filtering is shown. The reflectivity of the barcode type mark is higher than that of the neighbouring areas where no barcode type mark is formed. As shown in (4) of Figure 10, data "0010010" which is identical to the data recorded as the essential information is reproduced.

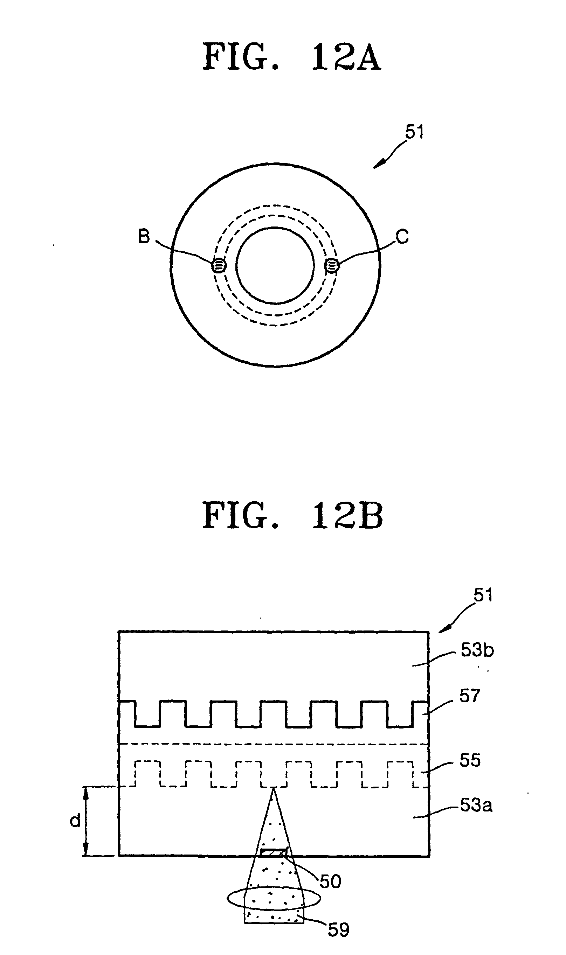

Figure 11 shows the structure of a multi-layer optical disc according to another preferred embodiment of the present invention. Referring to Figure 11, the multi-layer optical disc includes multiple layers L₀ through Lₙ sequentially arranged on a substrate 51. In Figure 11, R₀ through Rₙ denote the reflectivities of the respective layers L₀ through Lₙ.

Figure 12A is a plan view of a dual-layer optical disc having only the layers L₀ and L₁ of Figure 11 in which barcode type marks B and C are formed at opposite sides of the disc by radiating a laser beam through a 0.6-NA objective lens onto the surface of the dual-layer optical disc 51 of a 0.6-mm thickness. Figure 12B is a partial sectional view of the dual-layer optical disc shown in Figure 12A.

Referring to Figure 12B, in the dual-layer optical disc, a semi-transparent layer 55 as a recording layer, a reflective layer 57, and a protective layer 53b are sequentially arranged on a transparent substrate 53a. A barcode type mark 50 is formed on the surface of the transparent substrate 53a, and a laser beam 59 is focused onto the recording layer, the semi-transparent layer 55, through the barcode type mark 50.

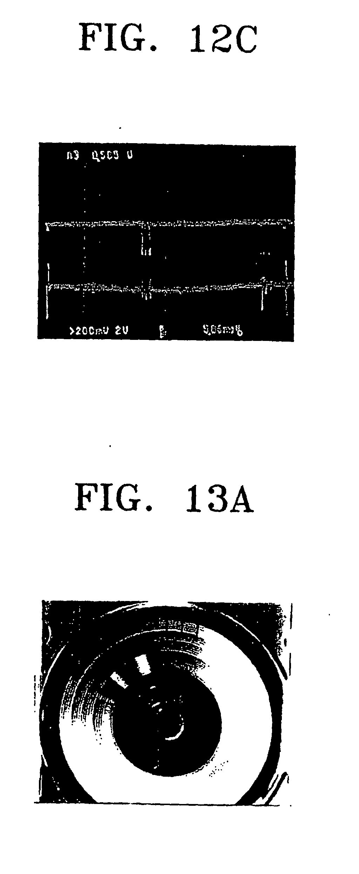

Figure 12C shows a mark signal reproduced by an essential information reproducing method according to an embodiment of the present invention. In Figure 12C, *A* denotes a radio frequency (RF) signal appearing in Channel 1, and *B* denotes a tracking error signal. Even through there exists a focusing error of 0.6 mm corresponding to the substrate thickness (d), the mark signal reproduced from the surface of the substrate 53a is apparent in Channel 1.

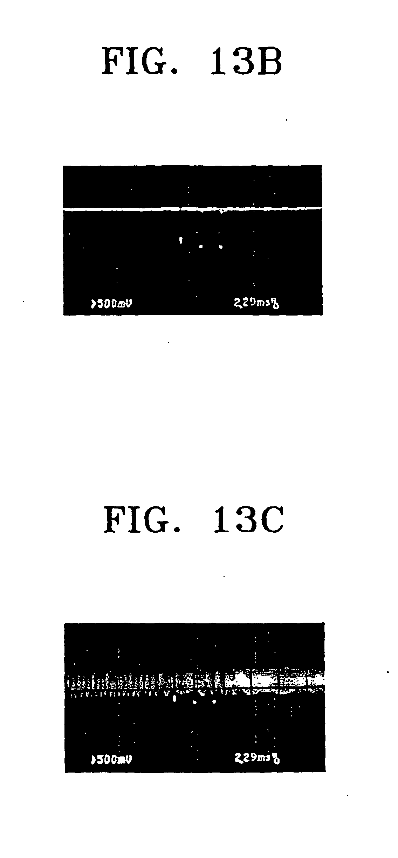

Figure 13A shows an optical disc in which barcode type marks are formed on a protective layer 0.1 mm apart from a recording layer by radiating a laser beam through a 0.85-NA objective lens. Figure 13B shows a mark signal detected by focusing a laser beam onto the recording layer 0.1 mm apart from the protective layer on which the barcode type marks are formed. Figure 13C shows a mark signal detected by focusing a laser beam onto the protective layer having the barcode type marks. As shown in Figures 13B and 13C, the waveforms of the two signals are almost the same, even with a focusing error of 0.1mm.

As is apparent from the results of the dual-layer optical disc, because a space layer formed between two layers L₀ and L₁ has a thickness no greater than 30-35 µm, a pattern of crystalline and amorphous marks formed in the layer L₀ to record essential information can be accurately reproduced by focusing a laser beam through a 0.65-NA objective lens onto the other layer L₁.

In another preferred embodiment of the essential information reproducing method according to the present invention, it is not necessary to record essential information in every recording layer of a multi-layer optical disc. In particular, once essential information is recorded as a barcode type mark in one arbitrary layer of the multi-layer optical disc, the essential information can be reproduced as long as the barcode type mark is irradiated, not focused, by a laser beam. In focusing and tracking to record data in or reproduce data from a multi-layer optical disc, if essential information is recorded in the layer L₀, the essential information can be reproduced as an arbitrary information layer is focused through the layer L₀ to read data therein or reproduce data therefrom.

Here, the level of a reproduction signal from essential information recorded as a pattern of crystalline and amorphous marks according to embodiments of the present invention is inverted to that of a reproduction signal from conventional BCA codes.

While this invention has been particularly shown and described with reference to preferred embodiments thereof, the preferred embodiments described above are merely illustrative and are not intended to limit the scope of the invention. Therefore, it will be understood by those skilled in the art that the essential information of an optical disc can be recorded in the form of any marks other than the barcode type marks. The essential information described above can be expressed in any code including BCA code. Therefore, due to the diversity of this invention, the scope of the invention is defined by the appended claims, rather than by the preferred embodiments described above.

As described above, the optical disc according to the present invention is advantageous in that its structure with a pattern of crystalline and amorphous marks as essential information can be applied to any type of recordable optical disc based on the principle of phase change, including single-layer and multi-layer discs.

An advantage of the method for recording essential information in an optical disc by phase change according to the teachings of the present invention is that the essential information can be recorded at the same time as the optical disc is initialized using an existing initializing apparatus without the need for an extra recording apparatus and additional time consumption.

An advantage of the method for reproducing essential information from an optical disc by phase change according to the embodiments of the present invention is that the essential information can be reproduced using an existing optical pickup. In addition, for a multi-layer optical disc, once essential information is recorded in any layer of the multiple layers by phase change according to the methods of the present invention, the essential information can be reproduced easily due to a high reflectivity of the crystalline phase.

Although a few preferred embodiments have been shown and described, it will be appreciated by those skilled in the art that various changes and modifications might be made without departing from the scope of the invention, as defined in the appended claims.

## Claims

1. An optical disc in which essential information such as a serial number or the like is recorded in a burst cutting area of the disc;
**characterised in that**:
the optical disc is a multi-layer optical disc having a plurality of recording layers (33a,33b); and
the essential information is recorded in a burst cutting area in one of the plurality of recording layers as a pattern of crystalline and amorphous marks (30a,30b).

2. The multi-layer disc of claim 1, wherein the crystalline and amorphous marks are in the form of barcodes extending in a radial direction.

3. The multi-layer disc of claim 1 or 2, wherein the crystalline and amorphous marks are arranged in a circle around the center of the optical disc.

4. The multi-layer disc of claim 1, 2 or 3, wherein the crystalline mark has a higher reflectivity than the amorphous mark.

5. The multi-layer disc of claim 4, wherein the crystalline mark has a reflectivity of no less than 20%.

6. A method for recording essential information such as a serial number or the like in a burst cutting area of an optical disc, **characterised in that**:
the optical disc is a multi-layer optical disc having a plurality of recording layers;
the essential information is recorded in a burst cutting area in one of the plurality of recording layers; and
the method comprises:
heating said one of the plurality of amorphous recording layer above a temperature of crystallization by radiating a beam according to a photoelectrically converted signal; and
slowly cooling said heated recording layer to the temperature of crystallization or below to form a pattern of crystalline and amorphous marks.

7. The method of claim 6, wherein the crystalline and amorphous marks are in the form of barcodes extending in a radial direction.

8. The method of claim 6 or 7, wherein the crystalline and amorphous marks are arranged in a circle around the center of the optical disc.

9. The method of claim 6, 7 or 8, wherein the crystalline mark has a higher reflectivity than the amorphous mark.

10. The method of claim 9, wherein the crystalline mark has a reflectivity of no less than 20%.

11. A method for reproducing essential information such as a serial number or the like from a burst cutting area of an optical disc, **characterised in that**:
the optical disc is a multi-layer optical disc having a plurality of recording layers;
the essential information is recorded in a burst cutting area in one of the plurality of recording layers; and
the method comprises:
radiating a beam onto a pattern of crystalline and amorphous marks of said one of the plurality of recording layers in which the essential information of the optical disc is recorded;
receiving the beam reflected from the pattern of crystalline and amorphous marks and photoelectrically converting the received beam to detect a signal;
filtering the detected signal through a high-pass filter; and
reproducing the essential information of the optical disc from the filtered signal.

12. The method of claim 11, wherein the crystalline and amorphous marks are in the form of barcodes extending in a radial direction.

13. The method of claim 11 or 12, wherein the crystalline and amorphous marks are arranged in a circle around the center of the optical disc.

14. The method of claim 11, 12 or 13, wherein the crystalline mark has a higher reflectivity than the amorphous mark.

15. The method of claim 14, wherein the crystalline mark has a reflectivity of no less than 20%.

## Patentansprüche

1. Optische Platte, bei der wichtige Informationen, wie beispielsweise eine Seriennummer oder dergleichen, in einem BCA (Burst Cutting Area) der Platte aufgezeichnet sind;
**dadurch gekennzeichnet, dass**:
die optische Platte eine mehrschichtige optische Platte mit einer Vielzahl von Aufzeichnungsschichten (33a, 33b) ist; und
die wichtigen Informationen in einem BCA in einer der Vielzahl von Aufzeichnungsschichten als ein Muster aus kristallinen und aus amorphen Markierungen (30a, 30b) aufgezeichnet sind.

2. Mehrschichtige Platte nach Anspruch 1, wobei die kristallinen und die amorphen Markierungen die Form von Strichcodes haben, die sich in einer radialen Richtung erstrecken.

3. Mehrschichtige Platte nach Anspruch 1 oder 2, wobei die kristallinen und die amorphen Markierungen in einem Kreis um die Mitte der optischen Platte herum angeordnet sind.

4. Mehrschichtige Platte nach Anspruch 1, 2 oder 3, wobei die kristalline Markierung ein stärkeres Reflexionsvermögen hat als die amorphe Markierung.

5. Mehrschichtige Platte nach Anspruch 4, wobei die kristalline Markierung ein Reflexionsvermögen von nicht weniger als 20 % hat.

6. Verfahren zum Aufzeichnen wichtiger Informationen, wie beispielsweise einer Seriennummer oder dergleichen, in einem BCA einer optischen Platte, **dadurch gekennzeichnet, dass**:
die optische Platte eine mehrschichtige Platte mit einer Vielzahl von Aufzeichnungsschichten ist;
die wichtigen Informationen in einem BCA in einer der Vielzahl von Aufzeichnungsschichten aufgezeichnet werden; und
das Verfahren umfasst:
Erhitzen der einen der Vielzahl amorpher Aufzeichnungsschichten über eine Kristallisationstemperatur hinaus durch Bestrahlen mit einem Strahl entsprechend einem fotoelektrisch umgewandelten Signal; und
langsames Abkühlen der erhitzten Aufzeichnungsschicht auf die Kristallisationstemperatur oder darunter, um ein Muster aus kristallinen und amorphen Markierungen auszubilden.

7. Verfahren nach Anspruch 6, wobei die kristallinen und die amorphen Markierungen die Form von Strichcodes haben, die sich in einer radialen Richtung erstrecken.

8. Verfahren nach Anspruch 6 oder 7, wobei die kristallinen und die amorphen Markierungen in einem Kreis um die Mitte der optischen Platte herum angeordnet sind.

9. Verfahren nach Anspruch 6,7 oder 8. wobei die kristalline Markierung ein stärkeres Reflexionsvermögen hat als die amorphe Markierung.

10. Verfahren nach Anspruch 9, wobei die kristalline Markierung ein Reflexionsvermögen von nicht weniger als 20 % hat.

11. Verfahren zum Wiedergeben wichtiger Informationen, wie beispielsweise einer Seriennummer oder dergleichen, von einem BCA einer optischen Platte, **dadurch gekennzeichnet, dass**:
die optische Platte eine mehrschichtige Platte mit einer Vielzahl von Aufzeichnungsschichten ist;
die wichtigen Informationen in einem BCA in einer der Vielzahl von Aufzeichnungsschichten aufgezeichnet sind; und
das Verfahren umfasst:
Bestrahlen eines Musters aus kristallinen und amorphen Markierungen der einen der Vielzahl von Aufzeichnungsschichten, in der die wichtigen Informationen der optischen Platte aufgezeichnet sind, mit einem Strahl;
Empfangen des von dem Muster aus kristallinen und amorphen Markierungen reflektierten Strahls und fotoelektrisches Umwandeln des empfangenen Strahls, um ein Signal zu erfassen;
Filtern des erfassten Signals durch ein Hochpassfilter; und
Wiedergeben der wichtigen Information der optischen Platte aus dem gefilterten Signal.

12. Verfahren nach Anspruch 11, wobei die kristattinen und die amorphen Markierungen die Form von Strichcodes haben, die sich in einer radialen Richtung erstrecken.

13. Verfahren nach Anspruch 11 oder 12, wobei die kristallinen und die amorphen Markierungen in einem Kreis um die Mitte der optischen Platte herum angeordnet sind.

14. Verfahren nach Anspruch 11, 12 oder 13, wobei die kristalline Markierung ein stärkeres Reflexionsvermögen hat als die amorphe Markierung.

15. Verfahren nach Anspruch 14, wobei die kristalline Markierung ein Reflexionsvermögen von nicht weniger als 20 % hat.

## Revendications

1. Disque optique dans lequel des informations essentielles telles qu'un numéro de série ou analogue sont enregistrées dans une zone de découpage en salves du disque,
**caractérisé en ce que** :
le disque optique est un disque optique multicouche ayant une pluralité de couches d'enregistrement (33a, 33b), et
les informations essentielles sont enregistrées dans une zone de découpage en salves dans l'une des couches parmi la pluralité de couches d'enregistrement en tant que motif de marques cristallines et amorphes (30a, 30b).

2. Disque multicouche selon la revendication 1, dans lequel les marques cristallines et amorphes sont sous la forme de codes-barres s'étendant dans une direction radiale.

3. Disque multicouche selon la revendication 1 ou 2, dans lequel les marques cristallines et amorphes sont agencées dans un cercle autour du centre du disque optique.

4. Disque multicouche selon la revendication 1, 2 ou 3, dans lequel la marque cristalline a une réflectivité supérieure à celle de la marque amorphe.

5. Disque multicouche selon la revendication 4, dans lequel la marque cristalline a une réflectivité au moins égale à 20 %.

6. Procédé pour enregistrer des informations essentielles telles qu'un numéro de série ou analogue dans une zone de découpage en salves d'un disque optique, **caractérisé en ce que** :
le disque optique est un disque optique multicouche ayant une pluralité de couches d'enregistrement,
les informations essentielles sont enregistrées dans une zone de découpage en salves dans l'une des couches parmi la pluralité de couches d'enregistrement, et
le procédé comporte les étapes consistant à:
chauffer ladite couche parmi ladite pluralité de couches d'enregistrement amorphes au-dessus d'une température de cristallisation en rayonnant un faisceau conformément à un signal converti de manière photoélectrique, et
refroidir lentement ladite couche d'enregistrement chauffée à la température de cristallisation ou au-dessous pour former un motif de marques cristallines et amorphes.

7. Procédé selon la revendication 6, dans lequel les marques cristallines et amorphes sont sous la forme de codes-barres s'étendant dans une direction radiale.

8. Procédé selon la revendication 6 ou 7, dans lequel les marques cristallines et amorphes sont agencées dans un cercle autour du centre du disque optique.

9. Procédé selon la revendication 6, 7 ou 8, dans lequel la marque cristalline a une réflectivité supérieure à celle de la marque amorphe.

10. Procédé selon la revendication 9, dans lequel la marque cristalline a une réflectivité au moins égale à 20 %.

11. Procédé pour lire des informations essentielles telles qu'un numéro de série ou analogue à partir d'une zone de découpage en salves d'un disque optique, **caractérisé en ce que** :
le disque optique est un disque optique multicouche ayant une pluralité de couches d'enregistrement,
les informations essentielles sont enregistrées dans une zone de découpage en salves d'une couche parmi la pluralité de couches d'enregistrement,
le procédé comporte les étapes consistant à :
rayonner un faisceau sur un motif de marques cristallines et amorphes de ladite couche parmi la pluralité de couches d'enregistrement dans lequel les informations essentielles du disque optique sont enregistrées,
recevoir le faisceau réfléchi par le motif de marques cristallines et amorphes et convertir de manière photoélectrique le faisceau reçu pour détecter un signal,
filtrer le signal détecté via un filtre passe-haut, et
lire les informations essentielles du disque optique à partir du signal filtré.

12. Procédé selon la revendication 11, dans lequel les marques cristallines et amorphes sont sous la forme de codes-barres s'étendant dans une direction radiale.

13. Procédé selon la revendication 11 ou 12, dans lequel les marques cristallines et amorphes sont agencées dans un cercle autour du centre du disque optique.

14. Procédé selon la revendication 11, 12 ou 13, dans lequel la marque cristalline a une réflectivité supérieure à celle de la marque amorphe.

15. Procédé selon la revendication 14, dans lequel la marque cristalline a une réflectivité au moins égale à 20 %.
